(19) Europäisches Patentamt
European Patent Office
Office européen des brevets

(11) **EP 2 735 129 B1**

(12) **EUROPÄISCHE PATENTSCHRIFT**

(45) Veröffentlichungstag und Bekanntmachung des Hinweises auf die Patenterteilung:
**06.09.2017 Patentblatt 2017/36**

(21) Anmeldenummer: **12740493.7**

(22) Anmeldetag: **17.07.2012**

(51) Int Cl.:
*G06F 21/42* *(2013.01)* *G06F 21/60* *(2013.01)*
*H04L 29/06* *(2006.01)* *G06Q 30/00* *(2012.01)*

(86) Internationale Anmeldenummer:
**PCT/EP2012/003008**

(87) Internationale Veröffentlichungsnummer:
**WO 2013/010665 (24.01.2013 Gazette 2013/04)**

(54) **VERFAHREN ZUM ABSICHERN EINER TRANSAKTION**

METHOD FOR SECURING A TRANSACTION

MÉTHODE DE SÉCURISATION D'UNE TRANSACTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.07.2011 DE 102011108069**

(43) Veröffentlichungstag der Anmeldung:
**28.05.2014 Patentblatt 2014/22**

(73) Patentinhaber: **Giesecke+Devrient Mobile Security GmbH**
**81677 München (DE)**

(72) Erfinder:
• **WEISS, Dieter**
**81825 München (DE)**
• **BALDISCHWEILER, Michael**
**81825 München (DE)**

(56) Entgegenhaltungen:
**US-A- 6 092 202    US-A1- 2003 223 586**

## Beschreibung

Die Erfindung betrifft ein Verfahren, ein Computerprogrammprodukt, ein Kommunikationsendgerät sowie ein System zum Absichern einer Transaktion, insbesondere einer Bezahltransaktion, zwischen einem Kommunikationsendgerät und einer Serverinstanz.

Kommunikationsendgeräte werden in Gestalt eines Mobiltelefons, Smart Phones oder Personal Digital Assistants, kurz PDAs mit Mobiltelefonfunktion immer häufiger zur Durchführung von Transaktionen wie z.B. Banktransaktionen, Zahlungstransaktionen, Abruf von Dateninhalten und dergleichen verwendet. Dazu steht das Kommunikationsendgerät in einer Datenkommunikation mit einer Serverinstanz.

Als Serverinstanz wird in dieser Anmeldung eine von dem Kommunikationsendgerät lokal entfernte Instanz verstanden. Dabei handelt es sich beispielsweise um Hardware- oder Software-Serverinstanzen, welche Dienste und Dienstleistungen bereitstellt und anbietet Im Sinne der Anmeldung wird insbesondere ein E-Service, auch als Onlineshop oder Webshop bezeichnet, unter den Begriff Serverinstanz gefasst. Unter E-Services sind alle Dienste und Aktivitäten zusammengefasst, die mittels Computern erstellt und über elektronische Medien, wie das Internet, interaktiv angeboten und ausgeführt werden.

Ein E-Service stellt beispielsweise Waren und digitale Produkte im Internet bereit Der E-Service umfasst dabei eine Software mit einer virtuellen Warenkorbfunktionalität. Der Käufer wählt das gewünschte Produkt mittels seines Kommunikationsendgeräts aus. Es wird dadurch in einem virtuellen Warenkorb abgelegt und zur Bezahlung vorgemerkt. Hinter diesem E-Service steht nun ein physisches Geschäft, das die jeweilige Bestellung des Benutzers tatsächlich abwickelt

Alle diese E-Services bedingen eine Transaktion zwischen der Serverinstanz und dem Kommunikationsendgerät. Diese Transaktion ist entweder eine Bezahltransaktion, eine Identifizierungstransaktion, eine Authentifizierungstransaktion oder dergleichen mehr. Als Transaktion wird hier insbesondere eine Abfolge von Schritten verstanden, die als eine logische Einheit betrachtet werden können. Im Zuge der Transaktion und zum Zweck der Identifizierung und Authentisierung gibt ein Nutzer häufig sicherheitskritische oder vertrauliche Eingabedaten über eine Eingabeeinrichtung, wie z.B. eine Tastatur, in das Nutzerendgerät ein. Anschließend werden diese Eingabedaten über das Datenkommunikationsnetzwerk als transaktionsrelevante Daten an die Serverinstanz gesendet Im Folgeschritt gibt die Serverinstanz die Dienstleistung oder das Produkt frei, was im Folgenden unter Transaktionsfreigabe zu verstehen ist.

Hierbei besteht das prinzipielle Problem, dass sowohl persönliche oder öffentliche, mit Tastatur und Bildschirm ausgestattete mobile Kommunikationsendgeräte, wie z.B. Smart Phone, Handy oder dergleichen, ebenso wie das Datenkommunikationsnetzwerk in der Regel unsicher und insofern anfällig für Schadsoftware sind. Als Schadsoftware sind z.B. Viren, Würmer, Trojaner, Spyware oder dergleichen bekannt, welche die transaktionsrelevanten Daten abhören oder gar derart manipulieren können, dass anstelle der von dem Benutzer des Endgeräts bezweckten Transaktion eine unerwünschte Transaktion zugunsten eines unberechtigten Dritten ausgeführt wird, ohne dass dies für den Benutzer, das Kommunikationsendgerät bzw. der Serverinstanz zu erkennen ist. Ist eine derartige Transaktion manipuliert, können erhebliche Schäden für den Serverinstanz-Betreiber und auch für den bezahlenden Benutzer entstehen.

In der EP 1 260 077 B1 ist daher ein Verfahren beschrieben, mit welchem ein Benutzer eines Mobilfunkkommunikationsendgeräts eine Transaktion bestätigt. Hierbei wird ein Authentifizierungsserver in das Transaktionssystem einbezogen, welcher dazu verwendet wird, die Transaktion abzusichern, indem das Endgerät ein Angebot des Dienstanbieters automatisch beim Authentifizierungsserver als Transaktionsbestätigung hinterlegt. Dies ist insofern nachteilig, dass auf dem Mobiltelefon bereits Schadsoftware eingenistet sein kann, welche die Transaktionsbestätigung entsprechend manipuliert. Außerdem wird das System durch den zusätzlichen Authentifizierungsserver komplexer, wodurch Extrakosten entstehen.

Zur Absicherung von Transaktionen über ein Datenkommunikationsnetzwerk werden seit einiger Zeit sogenannte gesicherte Laufzeitumgebungen, auch als Trusted Execution Environment® oder TrustZone® bezeichnet eingesetzt. Diese gesicherten Laufzeitumgebungen werden dazu verwendet, sicherheitskritische Anwendungen in einer isolierten, manipulationsgesicherten Umgebung auszuführen.

Bisherige Lösungen verlangen auf Seiten der Serverinstanzen Änderungen in deren Internetauftritt, um die gesicherte Laufzeitumgebung in die Abwicklung von Transaktionen einzubinden. Diese Änderungen sind insbesondere die Bereitstellung weiterer Software und/ oder Hardwaremodule oder aufwendiger Zertifizierungsserver. Diese Änderungen sind mitunter mit erheblichen Kosten verbunden, wodurch Transaktionen unter Verwendung der gesicherten Laufzeitumgebungen heutzutage noch nicht weit verbreitet sind.

Das Dokument US 6 092 202 A aus dem Stand der Technik offenbart ein Verfahren zum Absichern einer Transaktion, insbesondere einer Bezahltransaktion, zwischen einem Kommunikationsendgerät (computer) und einer Serverinstanz (server) (Sp. 1, Z. 20-32), wobei das Kommunikationsendgerät einen Prozessor mit einer ungesicherten Laufzeitumgebung (traditional computing environment 102, Sp. 7, Z. 31-32) und einer gesicherte Laufzeitumgebung (security-coprocessor, Sp. 3, Z. 10-13, secure computing environment 104, Sp. 7, Z. 29-31) umfasst. Bei dem Verfahren werden mittels der gesicherten Laufzeitumgebung transaktionsrelevante Daten aus z.B. einer Chipkarte extrahiert und über einen internen Kanal an die ungesicherte Laufzeitumgebung gesendet, um von dort aus zur Transaktionsfreigabe weitergesendet zu werden.

Das Dokument US 2003/223586 A1 aus dem Stand der Technik offenbart einen Computer mit einer ungesicherten Laufzeitumgebung eines normalen Prozessors (D2, S. 2, [0023], general purpose processor 203) und einer gesicherten Laufzeitumgebung eines Sicherheitsprozessor (D2, S. 1, [0006], Z. 1-2; S. 2, [0024], security processor 213).

Der Erfindung liegt daher die Aufgabe zugrunde, Transaktionen zwischen Kommunikationsendgeräten und Serverinstanzen zu vereinfachen. Dabei soll trotzdem ein hohes Maß an Manipulationssicherheit gegeben werden und insbesondere keine infrastrukturelle Anpassungen innerhalb des Transaktionssystems notwendig sein.

Die Aufgabe der Erfindung wird durch die in den nebengeordneten unabhängigen Patentansprüchen beschriebenen Maßnahmen gelöst Vorteilhafte Ausgestaltungen sind in den jeweils abhängigen Ansprüchen beschrieben.

Die Aufgabe wird insbesondere durch ein Verfahren zum Absichern einer Transaktion, insbesondere einer Bezahltransaktion, zwischen einem Kommunikationsendgerät und einer Serverinstanz gelöst. Dabei umfasst das Kommunikationsendgerät einen Prozessor mit einer ungesicherten Laufzeitumgebung und einer gesicherte Laufzeitumgebung. Für das Verfahren wird zunächst ein erster Kommunikationskanal zwischen dem Kommunikationsendgerät und der Serverinstanz aufgebaut Abschließend werden transaktionsrelevante Daten von dem Kommunikationsendgerät an die Serverinstanz über den ersten Kommunikationskanal gesendet. Das erfindungsgemäße Verfahren zeichnet sich dadurch aus, dass vor dem Schritt des Sendens ein zweiter Kommunikationskanal zwischen der Browser-Anwendung in der ungesicherten Laufzeitumgebung und einer Transaktionsanwendung in der gesicherten Laufzeitumgebung aufgebaut und zumindest ein Teil der eingegebenen transaktionsrelevanten Daten über den zweiten Kommunikationskanal an die Transaktionsanwendung gesendet wird. Vor dem Schritt des Sendens erzeugt die Transaktionsanwendung aus dem erhaltenen Teil der transaktionsrelevanten Daten eine Bestätigungsinformation. Diese Bestätigungsinformation wird zur Freigabe der Transaktion verwendet. Mit Freigabe der Transaktion ist insbesondere eine Mitteilung der Bankinstanz an die Serverinstanz gemeint

Transaktionsrelevante Daten sind vorrangig Banktransaktionsdaten, insbesondere Kontonummer, Bankleitzahl, Kreditkartennummer, Kreditkartenablaufdatum, Name des Kreditkarteninhabers, der Prüfcode der Kreditkarte, Bankverbindungen, Überweisungsbeträge und dergleichen. Diese transaktionsrelevanten Daten werden von der Serverinstanz angefordert und entweder vom Benutzer in das Kommunikationsendgerät eingegeben und/oder von der Transaktionsanwendung generiert bzw. aus einem sicheren Speicherbereich der gesicherten Laufzeitumgebung ausgelesen.

Die Bankinstanz ist eine Instanz, die die transaktionsrelevanten Daten von der Serverinstanz erhält und mit den Bestätigungsinformationen vergleicht. Im Anschluss an den Vergleich erzeugt die Bankinstanz eine Nachricht an die Serverinstanz mit dem Ergebnis des Vergleichs. Daraufhin kann die Serverinstanz entscheiden, ob sie den zur Transaktion dazugehörigen Dienst oder Ware dem Benutzer zur Verfügung stellt.

Die Bankinstanz ist beispielsweise ein Kreditinstitut, das entgeltliche Dienstleistungen für den Zahlungs-, Kredit- und Kapitalverkehr anbietet

Des Weiteren können diese transaktionsrelevanten Daten sicherheitskritisch oder vertrauliche Daten sein, oder Daten, die zum Durchführen der Transaktion von der Serverinstanz angefordert werden, zum Beispiel persönliche Identifikationsnummern (PIN), Transaktionsnummern (TAN) oder weitere Transaktionsdaten, wie Betrag oder Bestellnummer eines Produkts.

Als eine Kommunikation zwischen Endgerät und Serverinstanz wird hier eine Signalübertragung verstanden, die durch das Sender-Empfänger-Modell geprägt ist. Dabei werden Informationen in Zeichen kodiert und von einem Sender über einen Kommunikationskanal an einen Empfänger übertragen.

Der erste Kommunikationskanal ist insbesondere ein über ein Mobilfunknetz. Als Mobilfunknetz wird hier eine technische Infrastruktur verstanden, auf der die Übertragung von Signalen für den Mobilfunk stattfindet. Dabei ist im Wesentlichen das Mobilvermittlungsnetz, in dem die Übertragung und Vermittlung der Signale zwischen ortsfesten Einrichtungen und Plattformen des Mobilfunknetzes stattfinden, sowie das Zugangsnetz (auch als Luftschnittstelle bezeichnet), in dem die Übertragung der Signale zwischen einer Mobilfunkantenne und einem mobilen Endgerät stattfindet, zu verstehen. Beispielsweise das "Global System for Mobile Communications", kurz GSM als Vertreter der sogenannten zweiten Generation oder das General Packet Radio Service, kurz GPRS und Universal Mobile Telecommunications System, kurz UMTS als Vertreter der sogenannten dritten Generation von Mobilfunknetzen seien hier beispielhaft erwähnt, wobei bei der dritten Generation das Mobilvermittlungsnetz um die Fähigkeit einer paketorientierten Datenübertragung erweitert wird, das Funknetz an sich aber unverändert ist.

Zum Ausführen einer Transaktion werden transaktionsrelevante Daten von dem Kommunikationsgerät an die Serverinstanz gesendet.

Die transaktionsrelevanten Daten können insbesondere das Datum, der Betrag, eine Transaktionsnummer, die die Transaktion eindeutig referenziert oder der gleichen sein. Diese transaktionsrelevanten Daten können von der Serverinstanz zumindest teilweise über den ersten Kommunikationskanal bereitgestellt worden sein. Diese transaktionsrelevanten Daten werden vor dem Schritt des Sendens zumindest teilweise über den zweiten Kommunikationskanal an die Transaktionsanwendung gesendet.

In einer alternativen erfindungsgemäßen Ausgestaltung wird zumindest ein Teil der transaktionsrelevanten Daten durch die Transaktionsanwendung bereitgestellt und/oder generiert

Die transaktionsrelevanten Daten können in einer bevorzugten erfindungsgemäßen Ausgestaltung durch den Benutzer in eine Browser-Anwendung in der ungesicherten Laufzeitumgebung eingegeben werden, wobei vor dem Schritt des Sendens zumindest ein Teil der eingegebenen transaktionsrelevanten Daten über den zweiten Kommunikationskanal an die Transaktionsanwendung gesendet wird. Dazu gibt der Benutzer insbesondere den Benutzername, die Kreditkartennummer, den Gültigkeitszeitraum der Kreditkarte, den Prüfcode CW der Kreditkarte und /oder das Kreditkarteninstitut ein.

Zum Senden der transaktionsrelevanten Daten an die Serverinstanz ist eine Browser-Anwendung vorgesehen. Da die Browser-Anwendung innerhalb der ungesicherten Laufzeitumgebung gestartet wurde, ist die Browser-Anwendung manipulationsgefährdet, sodass die transaktionsrelevanten Daten in einer gewissen Form überwacht und bestätigt werden muss. Dazu wird der zweite Kommunikationskanal zur gesicherten Laufzeitumgebung aufgebaut, die transaktionsrelevanten Daten werden zumindest zum Teil der gesicherten Laufzeitumgebung bereitgestellt und eine Bestätigungsinformation innerhalb einer manipulationsgeschützten Umgebung erzeugt.

Insbesondere weist die Browser-Anwendung ein Erweiterungsmodul, ein sogenanntes Browser-Plugin, auf. Dieses Erweiterungsmodul baut den zweiten Kommunikationskanal zwischen der Browser-Anwendung in der unsicheren Laufzeitumgebung und der Transaktionsanwendung in der sicheren Laufzeitumgebung auf, sodass die Transaktionsanwendung in der gesicherten Laufzeitumgebung den Teil der eingegebenen transaktionsrelevanten Daten zur Absicherung der Transaktion erhält, ggf. ergänzt bzw. überprüft Der zweite Kommunikationskanal verläuft ausschließlich prozessorintern. Das Erweiterungsmodul überwacht die Eingabe in der ungesicherten Laufzeitumgebung und stellt diese Daten der gesicherten Laufzeitumgebung zur Verfügung. Das TEE weist bestimmungsgemäß ein Modul auf Protokollschichtebene auf, welches Daten der ungesicherten Laufzeitumgebung in die gesicherte Laufzeitumgebung leiten kann. Ein derartiges Modul ist von dem Erweiterungsmodul verschieden, da es sich beim Erweiterungsmodul um eine Erweiterung der Browseranmeldung an sich handelt, also ein Modul auf der Ebene der Anwendungsschicht.

Zur Absicherung der Transaktion greift die Transaktionsanwendung in der gesicherten Laufzeitumgebung auf ein Eingabeelement des Kommunikationsendgeräts zu. Das Senden der transaktionsrelevanten Daten an die Serverinstanz erfolg erst nach einer manipulationsgesicherten Bestätigungseingabe des Benutzers.

In einer vorteilhaften Ausgestaltung prüft die Transaktionsanwendung in der gesicherten Laufzeitumgebung die eingegebenen transaktionsrelevanten Daten, insbesondere auf Konsistenz mit in der gesicherten Laufzeitumgebung abgelegten Daten. Diese abgelegten Daten können in einem gesicherten Speicherbereich oder auch innerhalb eines Sicherheitselements abgelegt sein, wobei das Sicherheitselement datenkommunikationstechnisch mit der gesicherten Laufzeitumgebung verbunden ist Diese Kommunikation kann kontaktbehaftet oder kontaktlos sein. Bei dem Sicherheitselement kann es sich um einen tragbaren Datenträger mit entsprechender Sicherheitsfunktionalität handeln, wie z.B. einer Smart Card, Chipkarte, Token, Massenspeicherkarte, Multimediakarte, oder die Teilnehmeridentifikationskarte kurz SIM oder alternativ ein Identifikationsdatenträger wie beispielsweise ein elektronischer Personalausweis bzw. Reisepass mit, auf einem Chip gespeicherten maschinenlesbaren Identifikationsdaten des Benutzers. Das Sicherheitselement ist insbesondere als Hardwarekomponente ausgestaltet und als ein fest integrierter Bestandteil im mobilen Endgerät angeordnet, wobei es entweder in der Form nicht vom mobilen Endgerät entnommen werden kann, beispielsweise als M2M Modul, Co-Prozessor. Alternativ ist das Sicherheitselement eine Softwarekomponente in Form eines gesicherten Speicherbereichs in der gesicherten Laufzeitumgebung.

Bei festgestellter Inkonsistenz der transaktionsrelevanten Daten mit Daten aus dem Sicherheitselement, zeigt die Transaktionsanwendung dem Benutzer über ein Ausgabeelement des Kommunikationsendgeräts eine entsprechende Warnmeldung an. Alternativ oder zusätzlich unterbindet sie das Senden der transaktionsrelevanten Daten an die Serverinstanz. Somit wird der Benutzer manipulationsgesichert informiert oder die Transaktion bei möglichem Schadsoftware-Angriff verhindert

In vorteilhafter Weise beinhaltet die Bestätigungsinformation auch Daten der Browser-Anwendung, insbesondere Daten über den ersten Kommunikationskanal und/oder weitere transaktionsspezifische Daten. Beispielsweise sind Bestätigungsinformationen ein URL oder die IP-Adresse der Serverinstanz. Zusätzlich können auch Ort, Datum und weitere, die Transaktion identifizierende Daten in die Bestätigungsinformation einfließen.

In einer vorteilhaften Ausgestaltung enthält die Bestätigungsinformation zumindest teilweise eine, die gesicherte Laufzeitumgebung identifizierende Information Dies kann beispielsweise eine für die gesicherte Laufzeitumgebung einmalig vergebene Identifizierungsnummer sein, die der Bankinstanz bekannt gegeben wurde. Alternativ wird die Bestätigungsinformation mit einem kryptografischen Schlüssel verschlüsselt, wobei die Serverinstanz in der Lage ist, diese Bestätigungsinformation wieder zu entschlüsseln. Alternativ wird ein transaktionsrelevantes Datum eindeutig mit der gesicherten Laufzeitumgebung verknüpft, wobei diese Verknüpfung der Serverinstanz im Vorfeld der Transaktion mitgeteilt wurde.

In einer bevorzugten Ausgestaltung baut die Transaktionsanwendung in der gesicherten Laufzeitumgebung einen dritten Kommunikationskanal zu der Bankinstanz auf und sendet die Bestätigungsinformation an die Bankinstanz, bevor die transaktionsrelevanten Daten an die Serverinstanz gesendet werden. Diese Bestätigungsinformation werden von der Serverinstanz anfordert. Die Serverinstanz vergleicht die Bestätigungsinformation mit den gesendeten transaktionsrelevanten Daten und gibt den mit der Transaktion verbundenen Service in Abhängigkeit des Vergleichs frei oder verhindert diesen.

In einer alternativen Ausgestaltung codiert die Transaktionsanwendung die Bestätigungsinformation in die transaktionsrelevanten Daten hinein. Die transaktionsrelevanten Daten mit der eincodierten Bestätigungsinformation werden anschließend der Browser-Anwendung bereitgestellt. Die transaktionsrelevanten Daten mit der eincodierten Bestätigungsinformation werden als transaktionsrelevante Daten an die Serverinstanz gesendet Insbesondere ist die Bestätigungsinformation in einen benutzerspezifischen Teil der Kreditkartennummer eincodiert, wodurch eine geänderte Kreditkartennummer erzeugt wird. Insbesondere wird die geänderte Kreditkartennummer anstelle der Kreditkartennummer als Teil der transaktionsrelevanten Daten an die Serverinstanz gesendet. Da der Benutzer die Eingabe der transaktionsrelevanten Daten bereits vorgenommen hat, ist es unnötig, die geänderte Kreditkartennummer erneut anzuzeigen, um den Benutzer nicht zu verwirren. Die Serverinstanz erkennt anhand der geänderten Nummer, dass die Kreditkartennummer eine Bestätigungsinformation enthält und decodiert die Kreditkartennummer entsprechend.

Im Erfindungsgedanken ist weiterhin ein Computerprogrammprodukt, das direkt in den internen Speicher eines Prozessors innerhalb eines digitalen Kommunikationsendgeräts geladen werden kann und Softwarecodeabschnitte umfasst, mit denen die Schritte des hier beschriebenen Verfahrens ausgeführt werden, wenn das Computerprogrammprodukt auf dem Prozessor läuft

Weiterhin wird die Aufgabe durch ein Kommunikationsendgerät mit Mitteln zur Durchführung des beschriebenen Verfahrens gelöst Das Endgerät weist dazu eine Prozessoreinheit mit einer ungesicherten Laufzeitumgebung und einer gesicherten Laufzeitumgebung; eine Eingabeeinheit, um Eingeben transaktionsrelevanter Daten; eine Ausgabeeinheit, zum Ausgeben transaktionsrelevanter Daten; sowie eine erste Schnittstelle zum Aufbauen eines ersten Kommunikationskanals und Senden von transaktionsrelevanten Daten auf. Das Endgerät weist insbesondere eine Browser-Anwendung in der ungesicherten Laufzeitumgebung mit einem Erweiterungsmodul auf, wobei dieses Erweiterungsmodul eine zweite Schnittstelle zum Aufbau eines zweiten Kommunikationskanals zu einer Transaktionsanwendung in der gesicherten Laufzeitumgebung aufweist. Die Transaktionsanwendung greift zumindest auf Teile der eingegebenen transaktionsrelevanten Daten über den zweiten Kommunikationskanal zu, um eine Bestätigungsinformation zur Absicherung der Transaktion zu erzeugen.

Weiterhin wird die Aufgabe durch ein System mit Mitteln zur Durchführung des beschriebenen Verfahrens gelöst Das System weist dabei ein hier beschriebenes Kommunikationsendgerät, eine Serverinstanz und eine Bankinstanz auf. Insbesondere weist das Kommunikationsendgerät eine gesicherte Laufzeitumgebung auf. Diese gesicherte Laufzeitumgebung ist mittels eines kryptografischen Schlüssels an dem System eindeutig identifizierbar.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:

Figur 1    eine schematische Darstellung einem in einem erfindungsgemäßen Kommunikationsgerät ausgebildeten Prozessor

Figur 2    eine schematische Darstellung eines erfindungsgemäßen Systems

Figur 3    eine schematische Darstellung eines ersten Ausführungsbeispiels des erfindungsgemäßen Verfahrens

Figur 4    eine schematische Darstellung eines zur Figur 3 alternativen Ausführungsbeispiels des erfindungsgemäßen Verfahrens

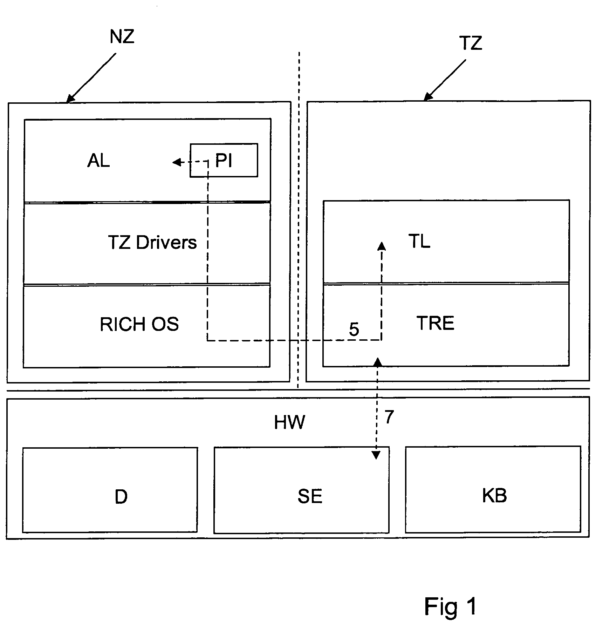

Figur 1 zeigt ein in einem erfindungsgemäßen Kommunikationsendgerät 1 ausgebildeten Prozessor P. Das Erzeugen der Bestätigungsinformation erfolgt erfindungsgemäß innerhalb einer gesicherten Laufzeitumgebung TZ. Diese gesicherte Laufzeitumgebung TZ ist beispielsweise eine ARM-TrustZone ® in einem Mobilfunkendgerät 1. Die ARM-TrustZone ® stellt eine bekannte Technologie dar, mit der in dem Prozessor P ein geschützter Bereich generiert wird, der als gesicherte Laufzeitumgebung TZ zur Durchführung von sicherheitskritischen Anwendungen, sogenannten Trustlets TL, verwendet wird. Zu diesem Zweck ist die ARM-TrustZone ® in einer Hardware-Plattform HW eines mobilen Kommunikationsgeräts 1 implementiert Diese Hardware-Plattform HW beinhaltet Zugriffsmöglichkeiten auf ein Display D, eine Tastatur KB und ggf. auch auf ein Sicherheitselement SE, beispielsweise ein SIM oder eine Massenspeicherkarte mit Sicherheitsfunktionalität

Ein Speicherbereich im Kommunikationsendgerät 1 ist dabei in einen ungesicherten Speicherbereich und einen gesicherten Speicherbereich unterteilt und beinhaltet eine Laufzeitumgebung. Die Laufzeitumgebung lädt Anwendungen AL, auch als Applets bezeichnet und lässt diese auf der Hardware-Plattform HW ablaufen. Basis- und Grundfunktionen einer Laufzeitumgebung sind Lesen, Schreiben, Sortieren und Suchen von Dateien, Transport von Daten über ein Kommunikationsnetzwerk, Steuerung von Eingabeelementen, beispielsweise der Tastatur KB oder einem Mikrofon sowie Steuerung von Ausgabeelementen, beispielsweise dem Display KB oder einem Lautsprecher.

In dem ungesicherten Speicherbereich wird dabei eine ungesicherte Laufzeitumgebung NZ, auch Normalzone bezeichnet ausgeführt, wohingegen in dem gesicherten Speicherbereich die gesicherte Laufzeitumgebung TZ ausgeführt wird. In der ungesicherten Laufzeitumgebung sind eine oder mehrere Anwendungen AL, auch als Applet bezeichnet, abgelegt und werden von der normalen Laufzeitumgebung NZ aus gestartet. Ein oder mehrere Treiber (= TZ System Driver und TZ API) sowie ein Betriebssystem ("Rich OS") sind ebenfalls im ungesicherten Speicherbereich angeordnet. In einem Angriffszenario befinden sich neben den Anwendungen AL auch Schadanwendungen in der ungesicherten Laufzeitumgebung NZ, die in der Lage ist, die mittels des Eingabeelements KB eingegebenen Daten auszuspionieren und zu verändern. Damit der Benutzer den Angriff nicht bemerkt ist ggf. auch das Ausgabeelement D von dem Angriff betroffen, sodass dem Benutzer falsche Informationen angezeigt werden.

In dem gesicherten Speicherbereich TZ läuft das Betriebssystem der gesicherten Laufzeitumgebung TRE (= Trustzone Runtime Environment) sowie eine oder mehrere sicherheitsrelevante Anwendungen, sogenannte Trustlets TL.

Neben der in Fig. 1 dargestellten ARM-TrustZone ® Technologie können auch andere Technologien zur Isolierung von sicheren Laufzeitumgebungen auf das hier beschriebene Vorgehen angewendet werden. Beispielsweise kann eine Virtualisierung in einem sog. Embedded System erfolgen. Beispielsweise können hierbei Produkte der Firmen Trango® und Open Kernel Labs® eingesetzt werden.

Einen Teil der Erfindung bildet ein Erweiterungsmodul PI einer Browser-Anwendung. Dieses Erweiterungsmodul, auch als Plug-In bezeichnet, stellt einen zweiten Kommunikationskanal 5 zwischen der Browser-Anwendung AL und der Transaktionsanwendung TL zur Absicherung der Transaktion her.

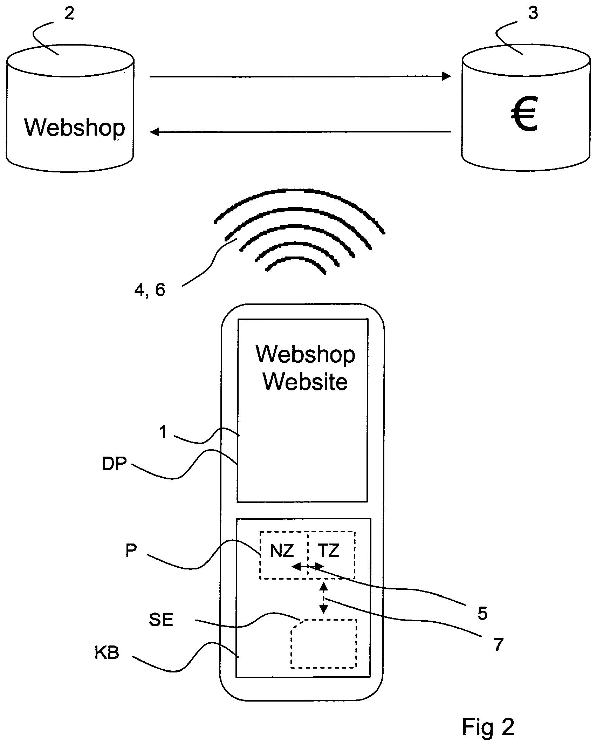

In Figur 2 ist ein erfindungsgemäßes System dargestellt, mit dem die Transaktionen abgesichert werden können. Hier ist das in Figur 1 beschriebene erfindungsgemäße Kommunikationsendgerät 1 erneut dargestellt. Wie schon in Figur 1 beschrieben, weist das Endgerät 1 einen Prozessor P mit einer gesicherten und einer ungesicherten Laufzeitumgebung TZ, NZ auf Zusätzlich sind ein Eingabeelement KB und ein Ausgabeelement D vorgesehen. Zur erfindungsgemäßen Absicherung einer Transaktion ist wiederum eine Browseranwendung AL mit einem Erweiterungsmodul PI vorgesehen, welches einen zweiten Kommunikationskanal 5 aufbauen kann. Zusätzlich ist das Endgerät 1 mit einem Sicherheitselement SE ausgestattet, zudem die gesicherte Laufzeitumgebung einen vierten Kommunikationskanal 7 aufbauen kann, um weitere absichernde Maßnahmen zu ergreifen, beispielsweise das

Überprüfen einer vom Benutzer eingegebenen PIN, die im SE abgelegt als Referenz-PIN abgelegt ist

Das System umfasst weiterhin eine Serverinstanz 2, hier in Gestalt eines Webshops und eine Bankinstanz 3.

Von der Serverinstanz 2 werden beispielsweise Informations- und Bildungsdienste, wie E-Education, E-Learning, E-Teaching, E-Publishing, E-Book, E-Zine und E-Catalog oder Beschaffungs-, Handels- und Bestelldienste wie E-Business, E-Commerce, E-Procurement, E-Cash, E-Shop, E-Intermediary, E-Auction oder kulturelle und administrative Dienste wie E-Culture, E-Government oder E-Vote angeboten, die der Benutzer mit seinem Endgerät 1 nutzen möchte. Dazu startet der Benutzer die Browser-Anwendung AL, um einen ersten Kommunikationskanal 4 zu der Serverinstanz 2 aufzubauen, welches beispielsweise in Form einer http -Anfrage durch die Browseranwendung AL erfolgt.

Die Browser-Anwendung AL, auch Webbrowser genannt, ist hierbei eine spezielle Anwendung zur Darstellung von Webseiten im Internet Während der Webbrowser AL in der ungesicherten Laufzeitumgebung NZ ausgeführt wird, befindet sich die Transaktionsanwendung TL innerhalb der gesicherten Laufzeitumgebung TZ. Somit kann die Transaktionsanwendung TL nicht durch Schadsoftware angegriffen werden, die sich möglicherweise auf dem Kommunikationsendgerät 1 befinden.

Ein Benutzer, der die erfindungsgemäße Transaktionsanwendung mittels gesicherter Laufzeitumgebung TZ nutzen möchte, muss das Erweiterungsmodul PI installiert haben. Dies kann zusammen beispielsweise durch den Benutzer selbst durch die der Installation einer "App" auf dem Kommunikationsendgerät 1 geschehen, die sich der Benutzer entweder bei einer Serverinstanz 2, bei der er Dienste erwerben möchte, oder bei einer Bankinstanz 3, über die die Bezahltransaktion physisch abgewickelt wird, herunterladen kann.

Vorzugsweise wird diese "App" durch den Anbieter des Bezahlverfahrens - im Folgenden als Bankinstanz 3 bezeichnet - zur Verfügung gestellt Im Rahmen des Herunterladens der "App" oder nach deren Installation wird die Bankinstanz 3 darüber informiert, welche transaktionsrelevanten Daten mit welcher gesicherten Laufzeitumgebung TZ verknüpft wird. Die transaktionsrelevanten Daten, insbesondere die Daten der Kreditkarte werden hierbei anhand der üblichen Kartendaten, wie Inhaber, Nummer, Ablaufdatum, Prüfcode etc identifiziert. Die gesicherte Laufzeitumgebung wird wiederum anhand eines kryptografischen Schlüssels $K_{Applet}$ eindeutig identifiziert, der entweder in der gesicherten Laufzeitumgebung generiert und der Bankinstanz 3 mitgeteilt wurde oder alternativ von der Bankinstanz generiert und der gesicherten Laufzeitumgebung TZ zur Verfügung gestellt wurde.

Im Anschluss des Installierens des Erweiterungsmoduls PI ist bei der Bankinstanz eine Zuordnung von transaktionsrelevanten Daten und einer eindeutigen Identifizierung der gesicherten Laufzeitumgebung TZ gegeben. Ebenso sind der gesicherten Laufzeitumgebung TZ die transaktionsrelevanten Daten bekannt

Darüber hinaus ist der Bankinstanz 3 bekannt, dass Transaktionen, die mit dem Endgerät 1 des Benutzers durchgeführt werden, mit der gesicherten Laufzeitumgebung abgesichert sind. Dies ist wichtig, damit die bei der Bankinstanz 3 ankommende Zahlungsaufforderung von der Serverinstanz 2 richtig in der Bankinstanz 3 bearbeitet werden können.

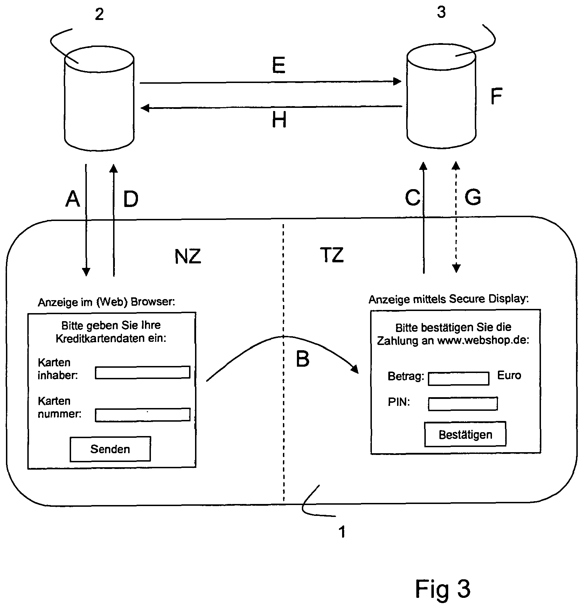

Gemäß Figur 3 wird nun ein erstes Ausführungsbeispiel der Erfindung näher erläutert Dazu baut eine Browser-Anwendung AL einen ersten Kommunikationskanal 4 zu der Serverinstanz 2 auf.

Das Einkaufen im Internet mittels Endgerät 1 läuft für den Benutzer nun wie gewohnt ab: Der Benutzer wählt die Dienstleistung, das Produkt bzw. die Ware auf der Webseite der Serverinstanz 2 aus. Die Serverinstanz 2 fordert nun den Benutzer im Schritt A auf, die ausgewählte Ware zu bezahlen und gibt daher ein HTML-Formular aus, in das der Benutzer die transaktionsrelevanten Daten, insbesondere Kreditkartendaten eingeben soll. Alternativ lässt der Benutzer die Daten vom Browser mittels "Auto-Vervollständigen" oder vom Trustlet TL automatisch einsetzen.

Das Browser-Plug-In PI erkennt im Schritt B, dass nun ein Bezahlvorgang ausgelöst wurde und baut einen zweiten Kommunikationskanal 5 auf, um die in die HTML-Formularfelder eingegebenen transaktionsrelevanten Daten zu überwachen. Dies kann entweder ständig geschehen, also nach jedem Tastendruck auf das Eingabeelement KB oder vorzugsweise beim Absenden des HTML-Fomulars, d.h. wenn der Benutzer den "Senden'-Knopf in der Browser-Anwendung aktiviert hat. Wird das HTML-Formular zunächst komplett ausgefüllt und anschließend das Browser-Plug-In PI zum Übertragen der eingegebenen transaktionsrelevanten Daten an die gesicherte Laufzeitumgebung TZ aktiviert (Schritt B) liegen diese Daten bereits in ihrer endgültigen Form vor und der Benutzer hat bereits angezeigt, dass er nichts mehr daran ändern möchte.

Das Browser-Plug-IN PI sucht nun die HTML-Formularfelder nach den transaktionsrelevanten Daten ab, die überprüft/überwacht werden sollen. Dazu können die gesuchten/überwachten transaktionsrelevanten Daten, zum Beispiel die Kreditkartennummer, entweder im Browser-Plug-In PI selbst, also in der ungesicherten Laufzeitumgebung NZ oder in der gesicherten Laufzeitumgebung TZ gespeichert sein. In letzterem Fall ruft das Browser-Plug-In PI bei jedem Absenden eines HTML-Formulars die Transaktionsanwendung TL der gesicherten Laufzeitumgebung TZ auf, damit diese Transaktionsanwendung TL die HTML-Formularfelder nach den entsprechenden transaktionsrelevanten Daten durchsuchen kann.

Werden die transaktionsrelevanten Daten in einem HTML-Formularfeld gefunden, wird das Absenden der HTML-Formulardaten durch das Browser-Plug-IN PI unterbunden. Anschließend initiiert die Transaktionsanwendung TL die Maßnahmen zur Absicherung der Transaktion, was in Figur 3 noch im Schritt B dargestellt ist. Zusätzlich zu den eingegebenen transaktionsrelevanten Daten erhält die Transaktionsanwendung TL vom Browser-Plug-In PI weitere Daten der Browseranwendung, beispielsweise die URL d.h. der im Browser angezeigten Website oder die IP-Adresse der Serverinstanz 2. Zusätzlich können auch Ort, Datum und weitere, die Transaktion identifizierende Daten von dem Browser-Plug-IN an die gesicherte Laufzeitumgebung TL bereitgestellt werden.

Im einfachsten Fall zeigt die Transaktionsanwendung TL nun einen nicht manipulierbaren Dialog an, beispielsweise:

"Wollen Sie die gewünschte Transaktion bei www.serverinstanz.de wirklich ausführen"

Der Dialog kann nun auch Teile der transaktionsrelevanten Daten erneut wiedergeben. Das Ausgabeelement D lässt sich für diesen Dialog nur über die gesicherte Laufzeitumgebung TZ ansteuern, sodass jegliche Ausgabe von der gesicherten Laufzeitumgebung TZ generiert wird. Der Benutzer kann also sicher sein, dass die erneute Ausgabe manipulationsgesichert ist Der Benutzer kann nun die erneute Ausgabe mit den zuvor in das HTML-Formular eingegebenen transaktionsrelevanten Daten überprüfen und bei inkonsistenten Daten die Transaktion an dieser Stelle unterbinden. Das manipulationsgesicherte Ausgeben von Daten auf ein Ausgabeelement mittels einer gesicherten Laufzeitumgebung TZ ist beispielsweise aus der DE 102011018431, angemeldet am 21. April 2011 vom gleichen Anmelder, beschrieben, auf deren gesamte Beschreibung hier eindeutig Bezug genommen wird.

Der Benutzer des Endgeräts 1 wird nun aufgefordert, den Dialog zu beantworten. Die Beantwortung erfolgt über eine Eingabe mittels des Eingabeelements KB. Das Eingabeelement KB lässt sich für diesen Dialog nur über die gesicherte Laufzeitumgebung TZ ansteuern, sodass jegliche Eingabe bezüglich dieses Dialogs von der gesicherten Laufzeitumgebung TZ verifiziert wird. Somit kann der Dialog ausschließlich über eine manipulationssichere Eingabe vom Benutzer beantwortet werden. Das manipulationsgesicherte Eingeben von Daten mittels einer gesicherten Laufzeitumgebung TZ ist beispielsweise aus der DE 102010052666.5, angemeldet am 26. November 2010 vom gleichen Anmelder, beschrieben, auf deren gesamte Beschreibung hier eindeutig Bezug genommen wird.

Anstelle einer Ja/Nein-Antwort als Beantwortung des Dialogs kann der Benutzer auch dazu aufgefordert werden, Teile der transaktionsrelevanten Daten, beispielsweise Betrag und Kreditkartenprüfcode erneut einzugeben. Dies hat zwei Vorteile. Erstens wird dem Benutzer der zu zahlende Betrag bewusst. Ist das Endgerät 1 ansonsten entsprechend abgesichert, kann ggf. die Eingabe einer PIN o.ä. entfallen. Zweitens ist es nicht trivial, Teile der transaktionsrelevanten Daten aus der Vielzahl von unterschiedlichen Webseiten einzelner Serverinstanzen 2 herauszufiltern. Somit wäre dieser Dialog mit erneuter Eingabe eine elegante Methode für die Transaktionsanwendung TL, Teile der transaktionsrelevanten Daten zu erhalten.

Alternativ kann vom Benutzer auch eine PIN oder eine äquivalente Information, insbesondere Passwort, oder biometrischer Fingerabdruck gefordert werden.

Die Transaktionsanwendung TL erzeugt aus den mittels zweitem Kommunikationskanal 5 erhaltenen transaktionsrelevanten Daten eine Bestätigungsinformation, die mit dem kryptografischen Schlüssel $K_{Applet}$ der gesicherten Laufzeitumgebung TZ verschlüsselt wird. Beispielsweise ist eine Bestätigungsinformation wie folgt aufgebaut

$$\text{Bestätigungsinformation} = \text{enc}(URL_{Webshop} \,||\, Betrag, K_{Applet}) \,||\, \text{Kreditkartennummer} \quad .$$

Die Kreditkartennummer wird ohne Verschlüsselung angehängt Alternativ kann die Bestätigungsinformation selbst wiederum erneut verschlüsselt werden, damit bei der Datenübertragung niemand die Kreditkartennummer mitlesen kann.

Die Transaktionsanwendung TL sendet nun die Bestätigungsinformation an die entsprechende Bankinstanz 3, beispielsweise einen Kreditkartenanbieter. Dazu baut die Transaktionsanwendung TL einen dritten Kommunikationskanal 6 auf. Dieser Kanal 6 kann auf beliebige Art und Weise, beispielsweise SMS oder über Internet Protokoll ausgestaltet sein. Dies ist in Figur 3 durch Schritt C dargestellt Die Bankinstanz 3 kann anhand der vorliegenden Kreditkartennummer leicht herausgefunden werden, wodurch das Endgerät den Kanal zielgerichtet aufbauen kann.

Zum Aufbau des Kanals 6 wird beispielsweise die Bank Identification Number, kurz BIN auch als Issuer Identification Number IIN bezeichnet, verwendet Die BIN wird beispielsweise zur Identifikation von Kredit- und Debitkarten beim Routing innerhalb von Geldautomaten-Netzen verwendet Anhand der BIN kann der verwendete Kartentyp und die Bankinstanz 3, die die jeweilige Bezahlkarte herausgegeben hat, identifiziert werden. Eine BIN besitzt internationale Gültigkeit. Der genaue Aufbau der BIN ist in der Norm ISO 7812 beschrieben. Bei einer 16-stelligen Kreditkartennummer stellen die ersten 6 Stellen die BIN dar. Alternativ existieren BIN-Suchmaschinen, um beispielsweise die BIN einer EC-/Maestro Karte herausfinden zu können. Diese Informationen können aber auch beim Installieren des Trustlets TL in TL gespeichert werden. Damit wird eine Suche vermieden.

Somit verfügt die Transaktionsanwendung TL über eine Liste der Telefonnummern der Bankinstanzen 3, um eine SMS mit der Bestätigungsinformation über den dritten Kommunikationskanal 6 zu übertragen. Wird der Kanal 6 alternativ mittels Internet Protokoll IP aufgebaut verfügt die Transaktionsanwendung TL durch die BIN über eine Liste der URLs oder IP-Adressen der Bankinstanzen 3.

Wurde die Bestätigungsinformation an die Bankinstanz gesendet, veranlasst das Browser-Plug-IN das Senden der transaktionsrelevanten Daten an die Serverinstanz gemäß Schritt D, wodurch beispielsweise der http-Request über den ersten Kommunikationskanal 4 abgesendet wird. Der Betreiber des Serverinstanz 2 kontaktiert nach Erhalt der transaktionsrelevanten Daten die Bankinstanz 3 gemäß Schritt E der Figur 3, um die transaktionsrelevanten Daten prüfen zu lassen und den ausstehenden Geldbetrag einzuholen.

Die Bankinstanz 3 prüft nun im Schritt F nach, ob für die entsprechende Kreditkartennummer eine Bestätigungsinformation einer gesicherten Laufzeitumgebung TZ erforderlich ist Falls dem so ist, vergleicht die Bankinstanz 3 ob von einer gesicherten Laufzeitumgebung TZ eine Bestätigungsinformation mit den gleichen transaktionsrelevanten Daten, zum Beispiel Name und URL der Serverinstanz 2 und dem gleicher Betrag, vorliegt Ergibt der Vergleich eine Übereinstimmung, wird die Transaktion von der Bankinstanz 3 freigegeben. Dazu erhält die Serverinstanz im Schritt H das Ergebnis des Vergleichs, wodurch die Serverinstanz das Produkt, die Ware oder die Dienstleistung dem Benutzer des Endgeräts 1 zur Verfügung stellt

Ergibt der Vergleich im Schritt F, dass die transaktionsrelevanten Daten der Serverinstanz nicht mit den Daten der Bestätigungsinformation übereinstimmen, kann die Bankinstanz 3 gemäß Schritt G über den noch aufgebauten Kanal 6 Rückfragen stellen oder alternativ erneut einen dritten Kommunikationskanal 6 über die, mit der SMS übermittelte Telefonnummer oder alternativ die erhaltene IP-Adresse kontaktieren, um Rückfragen gemäß Schritt G zu stellen.

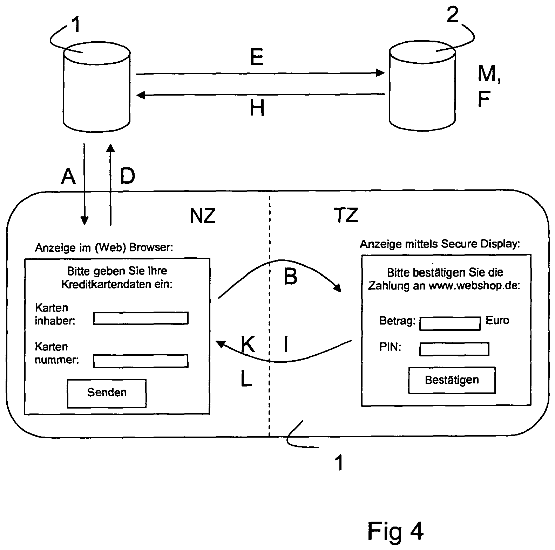

In Figur 4 ist ein zu Figur 3 alternatives Verfahren zum Absichern einer Transaktion dargestellt. Die Schritt A und B sind mit den Schritten A und B der Figur 3 identisch.

Wie in Figur 3 erzeugt die Transaktionsanwendung TL in der gesicherten Laufzeitumgebung TZ die Bestätigungsinformation. Diese Bestätigungsinformation wird jedoch nicht direkt an die Bankinstanz 3 gesendet (Schritt C der Figur 3), sondern in die transaktionsrelevanten Daten, beispielsweise die Kreditkartennummer, hineincodiert.

Eine Kreditkartennummer besteht aus einem zehnstelligen inhaberspezifischen Teil und der sechsstelligen BIN. Der sechsstellige Teil der Kreditkartennummer sollte unverändert bleiben, damit eine übliche Plausibilitätsprüfung der transaktionsrelevanten Daten, zum Beispiel auf Tippfehler, in der Serverinstanz 2 unverändert durchgeführt werden kann.

Der inhaberspezifische Teil der Kreditkartennummer wird nun verwendet, um die Bestätigungsinformation einzucodieren. Wenn alle zehn Dezimalstellen des inhaberspezifischen Teils der Kreditkarte zur Codierung verwendet werden, kann eine Bestätigungsinformation mit einer Datenmenge von etwa 32 Bit eincodiert werden.

Stellvertretend für viele Möglichkeiten zum Eincodieren von transaktionsrelevanten Daten als Bestätigungsinformation in 32 Bit wird im Folgenden eine Möglichkeit erläutert, wobei die Bestätigungsinformation beispielsweise aus dem zu zahlenden Betrag und der URL der Serverinstanz 2 besteht Dieses Eincodieren entspricht dem Schritt I der Figur 4.

Der zu zahlende Betrag wird in binärer Form ausgedrückt In ein 32Bit Datenwort, wobei 2 Nachkommastellen berücksichtigt werden müssen, können Zahlenwerte über 42 Millionen codiert werden, denn es gilt

$$\text{Maximaler Zahlenwert} = 2*\exp(32)/100.$$

Der URL der Serverinstanz 2 wird auf 32Bit gehasht. Das Ergebnis wird mit mit dem kryptografischen Schlüssel $K_{Applet}$ der gesicherten Laufzeitumgebung TZ verschlüsselt.

$$\text{Bestätigungsinformation} = enc(\text{Inhaberspezifischer Teil der Kreditkartennummer EXOR Betrag EXOR Hash } (URL_{Webshop}), K_{Applet})$$

Im Gegensatz zum Verfahren gemäß Figur 3 ist hier keine weitere Verschlüsselung der Bestätigungsinformation notwendig.

Die so erzeugte Bestätigungsinformation verfügt wiederum über 32 Bit was in 10 Dezimalstellen ausgedrückt wird. Der zehnstellige inhaberspezifische Teil der Kreditkartennummer wird nun mit der zehnstelligen Bestätigungsinformation ersetzt, wodurch eine geänderte Kreditkartennummer erhalten wird. Anschließend wird die Prüfziffer der Kreditkarte neu berechnet

Das Browser-Plug-In PI erhält im Schritt K der Figur 4 die geänderte Kreditkartennummer von der Transaktionsanwendung TL der gesicherten Laufzeitumgebung TZ und ersetzt die eingegebene Kreditkartennummer mit der geänderten Kreditkartennummer an entsprechender Stelle im HTML-Formularfeld der Browseranwendung AI. Da der Benutzer den "Senden"-Knopf bereits gedrückt hat, ist es sinnvoll die geänderte Kreditkartennummer gemäß Schritt L zu unterdrücken, sodass der Benutzer die geänderte Kreditkartennummer nicht sieht. Dadurch werden die Benutzer des Endgeräts 1 nicht verwirrt

Die Serverinstanz 2 erhält nun gemäß Schritt D die transaktionsrelevanten Daten mit der eincodierten Bestätigungsinformation über den ersten Kommunikationskanal 4. Die Serverinstanz 2 leitet diese erhaltenen Daten nun wie üblich an die Bankinstanz 3 gemäß Schritt E weiter. Die Bankinstanz 3 erkennt anhand der transaktionsrelevanten Daten, beispielsweise dem Inhabernamen, dass diese transaktionsrelevanten Daten von einer Transaktionsanwendung TL einer gesicherten Laufzeitumgebung TZ erzeugt worden sein könnten und speziell die Kreditkartennummer eine eincodierte Bestätigung enthält. Die Bankinstanz 3 errechnet mit dem im Vorfeld erhaltenen kryptografischen Schlüssel $K_{Applet}$ und den von der Serverinstanz 2 erhaltenen transaktionsrelevanten Daten (URL, Betrag) ebenfalls die geänderte Kreditkartennummer. Stimmt die errechnete geänderte Kreditkartennummer mit der von der Serverinstanz 2 erhaltenen geänderten Kreditkartennummer überein, wird die Transaktion freigegeben und die Serverinstanz 2 über die Konsistenz der Daten informiert, siehe Schritt H.

Bezugszeichenliste

1 Mobiles Kommunikationsendgerät, Smart Phone

| | |
|---|---|
| P | Prozessor |
| NZ | ungesicherte Laufzeitumgebung |
| TZ | gesicherte Laufzeitumgebung, Trustzone |
| TZ-ID | Identifizierungsnummer der TZ, $K_{Applet}$ |
| OS | Betriebssystem der ungesicherten Laufzeitumgebung |

TRE Betriebssystem der gesicherten Laufzeitumgebung, MobiCore
TL Trustlet, Anwendung innerhalb der TZ
AL Applet, Anwendung innerhalb der NZ
PI Plug-In, Erweiterungsmodul einer AL
HW Hardware Platform
SE Sicherheitselement
KB Tastatur, Eingabeelement
DP Display, Ausgabeelement

2 Serverinstanz, Webshop
3 Bankinstanz, Zahlungsdienstleister
4 Erster Kommunikationskanal, Mobilfunknetzwerk
5 Zweiter Kommunikationskanal, prozessorintern
6 Dritter Kommunikationskanal, Mobilfunknetzwerk
7 Vierter Kommunikationskanal, prozessorextern

A Start des Bezahlvorgangs
B Erkennen der Transaktion mittels Browser- Plug-In und Auslösen der Überprüfung mittels TZ
C Bestätigungsinformation an Bezahldienstleister
D Senden der transaktionsrelevanten Daten, Kreditkartendaten
E Weiterleiten der transaktionsrelevanten Daten und Webshopdaten
F Vergleich zwischen transaktionsrelevanten Daten/Webshopdaten und Bestätigungsinformation
G Rückfragen bei inkonsistenten Daten
H Information über erfolgreichen Bezahlvorgang
I Codieren der Kreditkartennummer mit Bestätigungsinformation (Betrag, Empfänger, TZ-ID der TZ) und erhalten einer geänderten Kartennummer
K Einsetzen der geänderten Kreditkartennummer in (Web) Browser
L Unterdrücken der geänderten Kreditkartennummer
M Errechnen der geänderten Kreditkartenummer anhand Webshopdaten und TZ-ID

**Patentansprüche**

1. Verfahren zum Absichern einer Transaktion, insbesondere einer Bezahltransaktion, zwischen einem Kommunikationsendgerät (1) und einer Serverinstanz (2), wobei das Kommunikationsendgerät (1) einen Prozessor (P) mit einer ungesicherten Laufzeitumgebung (NZ) und einer gesicherte Laufzeitumgebung (TZ) umfasst, mit den Verfahrensschritten:

   - Aufbauen eines ersten Kommunikationskanals (4) zwischen dem Kommunikationsendgerät (1) und der Serverinstanz (2);
   - Senden (D) von transaktionsrelevanten Daten von dem Kommunikationsendgerät (1) an die Serverinstanz (2) über den ersten Kommunikationskanal (4), **dadurch gekennzeichnet, dass:**

      - vor dem Schritt des Sendens ein zweiter Kommunikationskanal (5) zwischen der Browser-Anwendung (AL) in der ungesicherten Laufzeitumgebung (NZ) und einer Transaktionsanwendung (TL) in der gesicherten Laufzeitumgebung (TZ) aufgebaut wird;
      - vor dem Schritt des Sendens zumindest ein Teil der transaktionsrelevanten Daten über den zweiten Kommunikationskanal (5) an die Transaktionsanwendung (TL) gesendet wird;
      - vor dem Schritt des Sendens die Transaktionsanwendung (TL) aus dem erhaltenen Teil der transaktionsrelevanten Daten eine Bestätigungsinformation zur Absicherung der Transaktion erzeugt; und
      - diese Bestätigungsinformation zur Freigabe der Transaktion in der Serverinstanz (2) verwendet wird.

2. Verfahren nach Anspruch 1, wobei die Bestätigungsinformation auch Daten der Browser-Anwendung (AL), insbesondere Daten über den ersten Kommunikationskanal und/oder weiteren transaktionsspezifischen Daten enthält

3. Verfahren nach Anspruch 1 oder 2, wobei die transaktionsrelevanten Daten durch den Benutzer in eine Browser-Anwendung (AL) in der ungesicherten Laufzeitumgebung (NZ) eingegeben werden und vor dem Schritt des Sendens zumindest ein Teil der eingegebenen transaktionsrelevanten Daten über den zweiten Kommunikationskanal (5) an die Transaktionsanwendung (TL) gesendet wird.

4. Verfahren nach Anspruch 1 oder 2, wobei zumindest ein Teil der transaktionsrelevanten Daten durch die Serverinstanz (2) über den ersten Kommunikationskanal bereitgestellt werden und vor dem Schritt des Sendens zumindest ein Teil der eingegebenen transaktionsrelevanten Daten über den zweiten Kommunikationskanal (5) an die Transaktionsanwendung (TL) gesendet wird.

5. Verfahren nach Anspruch 1 oder 2, wobei zumindest ein Teil der transaktionsrelevanten Daten durch die Transaktionsanwendung (TL) bereitgestellt und/oder generiert wird.

6. Verfahren nach einem der vorhergehenden Ansprüche, wobei die Transaktionsanwendung (TL):

- in der gesicherten Laufzeitumgebung (TZ) die transaktionsrelevanten Daten prüft;
- bei durch das Prüfen festgestellter Inkonsistenz von Teilen der transaktionsrelevanten Daten:

- dem Benutzer über ein Ausgabeelement (D) des Kommunikationsendgeräts (1) eine Warnmeldung anzeigt; und/oder
- das Senden (D) der transaktionsrelevanten Daten an die Serverinstanz (2) unterbindet

7. Verfahren nach einem der vorhergehenden Ansprüche, wobei die Bestätigungsinformation eine, die gesicherte Laufzeitumgebung (TZ) eindeutig identifizierende Information (TZ-ID, $K_{Applet}$) enthält

8. Verfahren nach einem der vorhergehenden Ansprüche, wobei:

- die Transaktionsanwendung (TL) in der gesicherten Laufzeitumgebung (TZ) einen dritten Kommunikationskanal (6) zu der Bankinstanz (3) aufbaut; und
- die Bestätigungsinformation an die Bankinstanz (3) unter Verwendung von Teilen der transaktionsrelevanten Daten gesendet wird, bevor die transaktionsrelevanten Daten an die Serverinstanz (2) gesendet (D) werden.

9. Verfahren nach Anspruch 8, wobei

- die Serverinstanz (2) die von dem Kommunikationsendgerät (1) erhaltenen transaktionsrelevanten Daten zumindest teilweise an die Bankinstanz (3) sendet;
- die Bankinstanz die Bestätigungsinformation mit den von der Serverinstanz (2) gesendeten transaktionsrelevanten Daten vergleicht; und
- die Bankinstanz (2) in Abhängigkeit des Vergleichs die Transaktion freigibt oder verhindert.

10. Verfahren nach einem der Ansprüche 1 bis 7, wobei die Transaktionsanwendung (TL):

- die Bestätigungsinformation in die transaktionsrelevanten Daten eincodiert;
- die transaktionsrelevanten Daten mit der eincodierten Bestätigungsinformation der Browser-Anwendung (AL) bereitstellt; und
- die transaktionsrelevanten Daten mit der eincodierten Bestätigungsinformation als transaktionsrelevante Daten an die Serverinstanz (2) gesendet werden.

11. Verfahren nach Anspruch 10, wobei die Bestätigungsinformation in einen inhaberspezifischen Teil einer Kreditkartennummer eincodiert wird, wodurch eine geänderte Kreditkartennummer erzeugt wird.

12. Verfahren nach Anspruch 11, wobei die geänderte Kreditkartennummer anstelle der Kreditkartennummer als Teil der transaktionsrelevanten Daten an die Serverinstanz (2) gesendet wird.

13. Verfahren nach einem der vorhergehenden Ansprüche, wobei die Transaktionsanwendung (TL) in der gesicherten Laufzeitumgebung (TZ) die transaktionsrelevanten Daten mittels eines, dieser gesicherten Laufzeitumgebung (TZ) zugeordneten Schlüssels kryptografisch verschlüsselt

14. Verfahren nach einem der vorhergehenden Ansprüche, wobei einer Bankinstanz (3) eine Zugehörigkeit von zumindest Teilen der transaktionsrelevanten Daten, insbesondere der Kreditkartennummer, und der gesicherten Laufzeitumgebung (TZ) vor dem erstmaligen Ausführen des Verfahrens mitgeteilt wurde.

15. Computerprogrammprodukt, das direkt in den internen Speicher eines Prozessors (P) innerhalb eines digitalen Kommunikationsendgeräts (1) geladen werden kann und Softwarecodeabschnitte umfasst, mit denen die Schritte gemäß einem der Ansprüche 1 bis 11 ausgeführt werden, wenn das Computerprogrammprodukt auf dem Prozessor (P) läuft.

16. Kommunikationsendgerät (1) mit Mitteln zur Durchführung des Verfahrens nach einem der Ansprüche 1 bis 14 und aufweisend:

- eine Prozessoreinheit (P) mit einer ungesicherten Laufzeitumgebung (NZ) und einer gesicherten Laufzeitumgebung (TZ);
- eine Eingabeeinheit (KB), zum Eingeben transaktionsrelevanter Daten;
- eine Ausgabeeinheit (DP), zum Ausgeben transaktionsrelevanter Daten;
- eine erste Schnittstelle zum Aufbauen eines ersten Kommunikationskanals (4) und Senden (D) transaktionsrelevanter Daten;

**dadurch gekennzeichnet, dass:**

- eine Browser-Anwendung (AL) in der ungesicherten Laufzeitumgebung (NZ) ein Erweiterungsmodul (PI) aufweist und dieses Erweiterungsmodul (PI) eine zweite Schnittstelle zum Aufbau eines zweiten Kommunikationskanals (5) zu einer Transaktionsanwendung (TL) in der gesicherten Laufzeitumgebung (TZ) aufweist, und
- die Transaktionsanwendung (TL) zumindest auf Teile der eingegebenen transaktionsrelevanten Daten über den zweiten Kommunikationskanal (5) zugreifen kann, um eine Bestätigungsinformation zur Absicherung der Transaktion zu erzeugen.

17. System mit Mitteln zur Durchführung des Verfahrens nach einem der Ansprüche 1 bis 14, aufweisend:

- ein Kommunikationsendgerät (1) nach Anspruch 16;
- eine Serverinstanz (2); und
- eine Bankinstanz (3)

**dadurch gekennzeichnet, dass:**

- das Kommunikationsendgerät (1) eine gesicherte Laufzeitumgebung (TZ) aufweist und diese gesicherte Laufzeitumgebung (TZ) mittels eines kryptografischen Schlüssels an dem System eindeutig (TZ-ID) identifizierbar ist

**Claims**

1. A method for securing a transaction, in particular a payment transaction, between a communication end device (1) and a server instance (2), the communication end device (1) comprising a processor (P) with an insecure runtime environment (NZ) and a secure runtime environment (TZ), having the method steps of:

- setting up a first communication channel (4) between the communication end device (1) and the server instance (2);
- sending (D) transaction-relevant data from the communication end device (1) to the server instance (2) via the first communication channel (4), **characterized in that**:

- before the sending step a second communication channel (5) is set up between the browser application (AL) in the insecure runtime environment (NZ) and a transaction application (TL) in the secure runtime environment (TZ);
- before the sending step at least a part of the transaction-relevant data is sent to the transaction application (TL) via the second communication channel (5);
- before the sending step the transaction application (TL) generates from the received part of the transaction-relevant data a confirmation information item for securing the transaction; and
- this confirmation information item is employed for authorizing the transaction in the server instance (2).

2. The method according to claim 1, wherein the confirmation information item also contains data of the browser application (AL), in particular data about the first communication channel and/or further transaction-specific data.

3. The method according to claim 1 or 2, wherein the transaction-relevant data are inputteded by the user into a browser application (AL) in the insecure runtime environment (NZ) and before the sending step at least a part of the inputted transaction-relevant data is sent to the transaction application (TL) via the second communication channel (5).

4. The method according to claim 1 or 2, wherein at least a part of the transaction-relevant data is made available by the server instance (2) via the first communication channel and before the sending step at least a part of the inputted transaction-relevant data is sent to the transaction application (TL) via the second communication channel (5).

5. The method according to claim 1 or 2, wherein at least a part of the transaction-relevant data is made available and/or generated by the transaction application (TL).

6. The method according to any of the preceding claims, wherein the transaction application (TL):

   - checks the transaction-relevant data in the secure runtime environment (TZ);
   - if the check yields an inconsistency of parts of the transaction-relevant data:

       - displays a warning message to the user via an output element (D) of the communication end device (1); and/or
       - prevents the sending (D) of the transaction-relevant data to the server instance (2).

7. The method according to any of the preceding claims, wherein the confirmation information item contains an information item (TZ-ID, $K_{Applet}$) uniquely identifying the secure runtime environment (TZ).

8. The method according to any of the preceding claims, wherein:

   - the transaction application (TL) in the secure runtime environment (TZ) sets up a third communication channel (6) to the bank instance (3); and
   - the confirmation information item is sent to the bank instance (3) while employing parts of the transaction-relevant data, before the transaction-relevant data are sent (D) to the server instance (2).

9. The method according to claim 8, wherein

   - the server instance (2) sends the transaction-relevant data received from the communication end device (1) to the bank instance (3) at least partly;
   - the bank instance compares the confirmation information item with the transaction-relevant data sent by the server instance (2); and
   - the bank instance (2) authorizes or prevents the transaction in dependence on the comparison.

10. The method according to any of claims 1 to 7, wherein the transaction application (TL):

    - codes the confirmation information item into the transaction-relevant data;
    - makes the transaction-relevant data with the coded-in confirmation information item available to the browser application (AL); and
    - the transaction-relevant data with the coded-in confirmation information item are sent to the server instance (2) as the transaction-relevant data.

11. The method according to claim 10, wherein the confirmation information item is coded into an owner-specific part of a credit card number, thereby generating a changed credit card number.

12. The method according to claim 11, wherein the changed credit card number is sent to the server instance (2) as part of the transaction-relevant data, instead of the credit card number.

13. The method according to any of the preceding claims, wherein the transaction application (TL) in the secure runtime environment (TZ) encrypts the transaction-relevant data cryptographically by means of a key associated with this secure runtime environment (TZ).

14. The method according to any of the preceding claims, wherein an affiliation of at least parts of the transaction-relevant data, in particular the credit card number, and the secure runtime environment (TZ) was communicated to a bank instance (3) before the first-time performance of the method.

15. A computer program product which can be loaded directly into the internal memory of a processor (P) within a digital communication end device (1) and comprises software code portions with which the steps according to any of claims 1 to 11 are performed when the computer program product runs on the processor (P).

16. A communication end device (1) having means for carrying out the method according to any of claims 1 to 14 and having:

   - a processor unit (P) with an insecure runtime environment (NZ) and a secure runtime environment (TZ);
   - an input unit (KB) for inputting transaction-relevant data;
   - an output unit (DP) for outputting transaction-relevant data;
   - a first interface for setting up a first communication channel (4) and sending (D) transaction-relevant data;

   **characterized in that**:

   - a browser application (AL) in the insecure runtime environment (NZ) has an extension module (PI), and this extension module (PI) has a second interface for setting up a second communication channel (5) to a transaction application (TL) in the secure runtime environment (TZ), and
   - the transaction application (TL) can access at least parts of the inputted transaction-relevant data via the second communication channel (5) in order to generate a confirmation information item for securing the transaction.

17. A system having means for carrying out the method according to any of claims 1 to 14, having:

   - a communication end device (1) according to claim 16;
   - a server instance (2); and
   - a bank instance (3)

   **characterized in that**:

   - the communication end device (1) has a secure runtime environment (TZ) and this secure runtime environment (TZ) is identifiable uniquely (TZ-ID) by means of a cryptographic key on the system.

## Revendications

1. Dispositif de sécurisation d'une transaction, en particulier d'une transaction de paiement, entre un terminal de communication (1) et une instance de serveur (2), le terminal de communication (1) comprenant un processeur (P) qui a un environnement d'exécution non sécurisé (NZ) et un environnement d'exécution sécurisé (TZ), comprenant les étapes suivantes :

   - mise en place d'un premier canal de communication (4) entre le terminal de communication (1) et l'instance de serveur (2) ;
   - envoi (D), du terminal de communication (1) à l'instance de serveur (2), de données touchant à la transaction, par l'intermédiaire du premier canal de communication (4),

   **caractérisé en ce que :**

   - avant l'étape de l'envoi, un deuxième canal de communication (5) entre l'application de navigateur (AL) dans l'environnement d'exécution non sécurisé (NZ) et une application de transaction (TL) dans l'environnement d'exécution sécurisé (TZ) est mis en place ;
   - avant l'étape de l'envoi, au moins une partie des données touchant à la transaction est envoyée par l'intermédiaire du deuxième canal de communication (5) à l'application de transaction (TL) ;
   - avant l'étape de l'envoi, l'application de transaction (TL) génère, à partir de la partie reçue des données touchant à la transaction, une information de confirmation pour la sécurisation de la transaction ; et
   - cette information de confirmation est utilisée pour le déblocage de la transaction dans l'instance de serveur (2).

**2.** Procédé selon la revendication 1, l'information de confirmation contenant aussi des données de l'application de navigateur (AL), en particulier des données sur le premier canal de communication et/ou d'autres données spécifiques à la transaction.

**3.** Procédé selon la revendication 1 ou 2, **caractérisé en ce que** les données touchant à la transaction sont, par l'utilisateur, introduites dans une application de navigateur (AL) dans l'environnement d'exécution non sécurisé (NZ), et **en ce que**, avant l'étape de l'envoi, au moins une partie des données touchant à la transaction introduites est envoyée par l'intermédiaire du deuxième canal de communication (5) à l'application de transaction (TL).

**4.** Procédé selon la revendication 1 ou 2, au moins une partie des données touchant à la transaction introduites étant, par l'instance de serveur (2), mise à disposition par l'intermédiaire du premier canal de communication, et en ce que, avant l'étape de l'envoi, au moins une partie des données touchant à la transaction introduites est envoyée par l'intermédiaire du deuxième canal de communication (5) à l'application de transaction (TL).

**5.** Procédé selon la revendication 1 ou 2, au moins une partie des données touchant à la transaction étant, par l'application de transaction (TL), mise à disposition et/ou générée.

**6.** Procédé selon une des revendications précédentes, cependant que l'application de transaction (TL) :

- vérifie dans l'environnement d'exécution sécurisé (TZ) les données touchant à la transaction ;
- en cas d'incohérence, constatée par la vérification, de parties des données touchant à la transaction-:

- à l'utilisateur, par l'intermédiaire d'un élément de sortie (D) du terminal de communication (1), affiche un message d'avertissement ; et/ou
- évite l'envoi (D) des données touchant à la transaction à l'instance de serveur (2).

**7.** Procédé selon une des revendications précédentes, cependant que l'information de confirmation contient une information (TZ-ID, $K_{Applet}$) identifiant univoquement l'environnement d'exécution sécurisé (TZ).

**8.** Procédé selon une des revendications précédentes, cependant que :

l'application de transaction (TL) met en place, dans l'environnement d'exécution sécurisé (TZ), un troisième canal de communication (6) vers l'instance bancaire (3) ; et
l'information de confirmation est, avant que les données touchant à la transaction ne soient envoyées (D) à l'instance de serveur (2), envoyée à l'instance bancaire (3) en utilisant des parties des données touchant à la transaction.

**9.** Procédé selon la revendication 8, cependant que :

- l'instance de serveur (2) envoie au moins partiellement à l'instance bancaire (3) les données touchant à la transaction reçues de la part du terminal de communication (1) ;
- l'instance bancaire compare l'information de confirmation avec les données touchant à la transaction envoyées par l'instance de serveur (2) ; et
- l'instance bancaire (2) débloque ou empêche la transaction en fonction de la comparaison.

**10.** Procédé selon une des revendications de 1 à 7, cependant que l'application de transaction (TL) :

- encode l'information de confirmation dans les données touchant à la transaction ;
- met à disposition de l'application de navigateur (AL) les données touchant à la transaction incluant l'information de confirmation encodée ; et
- les données touchant à la transaction incluant l'information de confirmation encodée sont envoyées à l'instance de serveur (2) en tant que données touchant à la transaction.

**11.** Procédé selon la revendication 10, cependant que l'information de confirmation est encodée dans une partie d'un numéro de carte de crédit spécifique du titulaire, ce par quoi un numéro modifié de carte de crédit est généré.

**12.** Procédé selon la revendication 11, cependant que le numéro modifié de carte de crédit est envoyé à la place du numéro de carte de crédit en tant que partie des données touchant à la transaction à l'instance de serveur (2).

**13.** Procédé selon une des revendications précédentes, cependant que l'application de transaction (TL) chiffre cryptographiquement dans l'environnement d'exécution sécurisé (TZ) les données touchant à la transaction au moyen d'une clé affectée à cet environnement d'exécution sécurisé (TZ).

**14.** Procédé selon une des revendications précédentes, cependant que, à une instance bancaire (3), une appartenance d'au moins des parties des données touchant à la transaction, en particulier du numéro de carte de crédit, et de l'environnement d'exécution sécurisé (TZ) a été communiquée avant la première exécution du procédé.

**15.** Produit programme d'ordinateur qui peut être chargé directement dans la mémoire interne d'un processeur (P) à l'intérieur d'un terminal de communication (1) numérique, et qui comprend des sections de code logiciel avec lesquelles les étapes suivant une des revendications de 1 à 11 sont exécutées quand le produit programme d'ordinateur est en train de fonctionner sur le processeur (P).

**16.** Terminal de communication (1) muni de moyens destinés à l'accomplissement du procédé suivant une des revendications de 1 à 14, et comportant :

- une unité de processeur (P) ayant un environnement d'exécution non sécurisé (NZ) et un environnement d'exécution sécurisé (TZ) ;
- une unité d'introduction (KB) destinée à l'introduction de données touchant à la transaction ;
- une unité de sortie (DP) destinée à la sortie de données touchant à la transaction ;
- une première interface destinée à la mise en place d'un premier canal de communication (4) et à l'envoi (D) de données touchant à la transaction ;

**caractérisé en ce que :**

- une application de navigateur (AL) dans l'environnement d'exécution non sécurisé (NZ) comporte un module complémentaire (PI), et **en ce que** ce module complémentaire (PI) comporte une deuxième interface pour la mise en place d'un deuxième canal de communication (5) vers une application de transaction (TL) dans l'environnement d'exécution sécurisé (TZ), et
- l'application de transaction (TL) peut, par l'intermédiaire du deuxième canal de communication (5), accéder à au moins des parties des données touchant à la transaction introduites, afin de générer une information de confirmation pour la sécurisation de la transaction.

**17.** Système muni de moyens destinés à l'accomplissement du procédé suivant une des revendications de 1 à 14, comportant :

- un terminal de communication (1) selon la revendication 16 ;
- une instance de serveur (2) ; et
- une instance bancaire (3)

**caractérisé en ce que :**

- le terminal de communication (1) comporte un environnement d'exécution sécurisé (TZ), et **en ce que** cet environnement d'exécution sécurisé (TZ) est univoquement identifiable (TZ-ID) dans le système au moyen d'une clé cryptographique.

Fig 1

Fig 2

2

3

E

H

F

A D C G

NZ TZ

Anzeige im (Web) Browser:

Bitte geben Sie Ihre
Kreditkartendaten ein:

Karten
inhaber:

Karten
nummer:

Senden

B

Anzeige mittels Secure Display:

Bitte bestätigen Sie die
Zahlung an www.webshop.de:

Betrag: Euro

PIN:

Bestätigen

1

Fig 3

NZ     TZ

Anzeige im (Web) Browser:

Bitte geben Sie Ihre
Kreditkartendaten ein:

Karten
inhaber:

Karten
nummer:

Senden

Anzeige mittels Secure Display:

Bitte bestätigen Sie die
Zahlung an www.webshop.de:

Betrag:          Euro

PIN:

Bestätigen

Fig 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1260077 B1
- US 6092202 A
- US 2003223586 A1
- DE 102011018431
- DE 102010052666